# EUROPEAN PATENT APPLICATION

(11) **EP 1 482 492 A2**
(43) Date of publication of application: **01.12.2004**
(21) Application number: 04011925.7
(22) Date of filing: 19.05.2004
(51) Int. Cl.: G11B 7/12, G11B 33/14

(54) **Optical storage system**

(30) Priority: 31.05.2003 KR 2003035038
(71) Applicant: Daewoo Electronics Corporation, Seoul (KR)
(72) Inventor: Park, Joo-Youn, Mapo-gu Seoul (KR)
(74) Representative: Jacoby, Georg, Dr.

(57) **Abstract**

An optical storage system of the present invention includes an optical storage medium (20) and a pick-up head (10) for reproducing information from the optical storage medium. The pick-up head has an optical lens (11) and a lens protecting device (120) for preventing a foreign material from adhering to the optical lens. The lens protecting device opens the optical lens of the pick-up head when the pick-up head reproduces the information from the optical recording medium.

## Description

The present invention relates to an optical storage system, such as a CD-ROM, a DVD-ROM, a holographic ROM system and the like; and more particularly, to an optical storage system having a pick-up head which is capable of improving reliability of signal reproduction of the optical storage system by preventing attachment of foreign materials to its optical lens.

In general, the conventional optical storage system, such as a CD-ROM, a DVD-ROM or a holographic ROM system, includes an optical drive unit and a storage medium. The storage medium normally used in the CD-ROM or the DVD-ROM system is compact disks or digital versatile disks, which store information in a form of bit tracks formed on the disk surfaces. And the storage medium used in the holographic ROM system is holographic disks, which store information in a form of hologram tracks formed therein.

Further, the optical drive unit of the conventional optical storage system is provided with a pick-up head for reproducing information from the aforementioned disks. The pick-up head basically has a light source, e.g., a semiconductor laser, for emitting a beam, an objective lens for condensing the beam, a photodetector for detecting the beam reflected or diffracted from the disk (hereinafter referred to as a signal beam) and an outer casing for accommodating the aforementioned components therein.

In such pick-up head, the objective lens is mounted on a lens holder and a surface of the objective lens opposing to the disk is always exposed to air in a disk loading device for accommodating the disk. Space in the disk loading device is communicated with the surroundings of the optical storage system whenever the disk loading device loads or ejects the disk. Thus, a number of foreign materials, such as dusts and fuzz, are introduced into the space in the disk loading device. And a portion of foreign materials adhere to the surface of the objective lens exposed to the air in the disk loading device especially while the optical storage system is out of operation. The attachment of the foreign materials to the objective lens may lead to a decrease in level of the signal beam, distortion of the signal beam and the like.

Particularly, in a hologram pick-up head of the holographic ROM system, addition to the objective lens, a reducer lens for focusing the beam, i.e., a reference (or reproducing) beam, emitted from the light source, has a surface facing the disk and being exposed to the air in the disk loading device. Thus, foreign materials adhere to the surface of the reducer lens exposed to the air in the disk loading device. This, in turn, may lead to an undesirable change in a phase of the reference beam.

Accordingly, in the conventional optical storage system, there is a high risk of a sudden and large decrease in the reliability of signal reproduction owing to the deterioration of level of the signal beam, distortion of the signal beam and the phase change caused by the attachment of the foreign materials to the optical lens.

It is, therefore, an object of the present invention to provide an optical storage system having a pick-up head, which is capable of improving reliability of signal reproduction by preventing attachment of foreign materials to its optical lens.

In accordance with the present invention, there is provided an optical storage system, including: an optical storage medium; and a pick-up head for reproducing information from the optical storage medium, wherein the pick-up head includes an optical lens and a lens protecting device for preventing a foreign material from adhering to the optical lens. The lens protecting device opens the optical lens of the pick-up head when the pick-up head reproduces the information from the optical recording medium.

The above and other objects and features of the present invention will become apparent from the following description of preferred embodiments given in conjunction with the accompanying drawings, in which:
Fig. 1 sets forth a diagram of an optical storage system using a compact disk or/and a digital versatile disk as a storage medium in accordance with a first preferred embodiment of the present invention;
Fig. 2A presents a top view of the lens protecting device of the present invention with its circular opening for exposing the objective lens opened.
Fig. 2B depicts a top view of the lens protecting device of the present invention with its circular opening for exposing an objective lens closed;
Fig. 3 shows a cross sectional view of the lens protecting device taken along a line A-A of Fig. 2B.
Fig. 4 offers a cross sectional view of a lens protecting device in accordance with another exemplary embodiment of the present invention; and
Fig. 5 illustrates a diagram of an optical storage system using a holographic disk as a storage medium in accordance with a second preferred embodiment of the present invention.

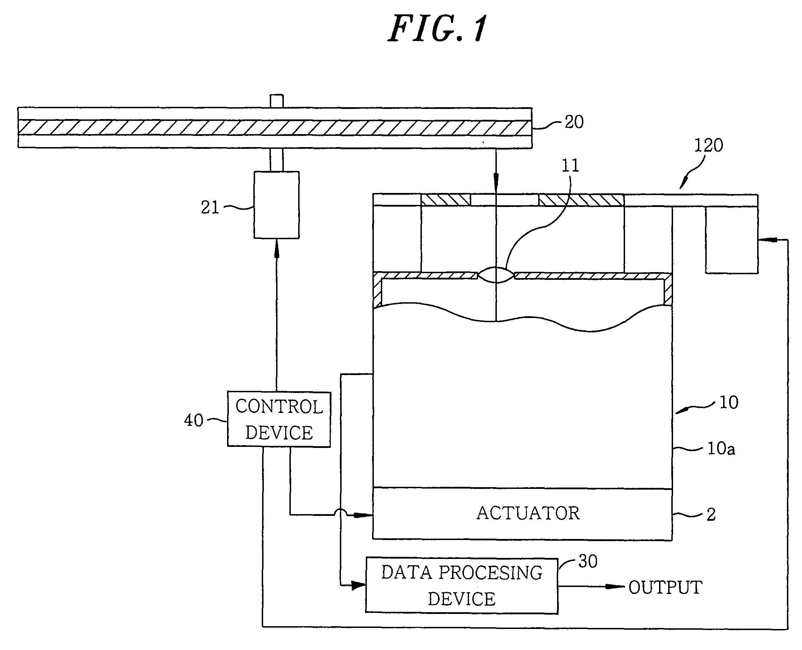

Preferred embodiments of the present invention will now be described in detail with reference to the accompanying drawings, wherein like parts appearing Figs. 1 to 5 are represented by like reference numerals.

Referring to Fig. 1, there is illustrated a diagram of an optical storage system using a compact disk or/and a digital versatile disk as a storage medium in accordance with the first preferred embodiment of the present invention. The optical storage system includes a pick-up head 10 for reproducing information stored in a form of bit tracks in a disk 20. The pick-up head 10 introduces a beam through an objective lens on the bit tracks of the disk 20 (referred to as a reproducing beam hereinafter). The reproducing beam is reflected by the disk 20 as a reflected beam (referred to as a signal beam hereinafter) and enters the pick-up head 10 through the objective lens 11. Then, the pick-up head 10 detects the signal beam and transmits signals to a data processing device 30 in response to the signal beam. Further, the disk 20 is rotated by a driving device 21, which is controlled by a control device 40. And the pick-up head 10 is moved in a radial direction relative to the disk 20 by an actuator 2, which is controlled by the control device 40.

Further, the pick-up head 10 has a lens protecting device 120 for preventing foreign materials from adhering to the objective lens 11. The lens protecting device 120 is mounted on an upper portion of an outer casing 10a of the pick-up head 10, i.e., between the objective lens 11 and the disk 20 mounted on the driving device 21, and controlled by the control device 40. In response to a control signal from the control device 40, the lens protecting device 120 allows the reproducing beam and the signal beam to pass therethrough, or covers an outer surface of the objective lens 11 facing the disk 20.

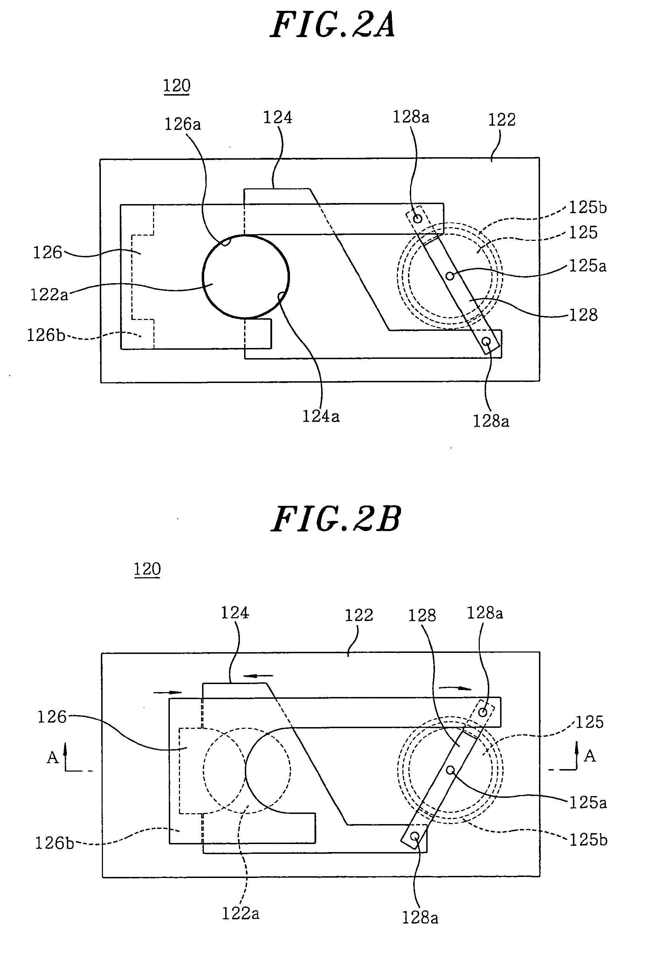

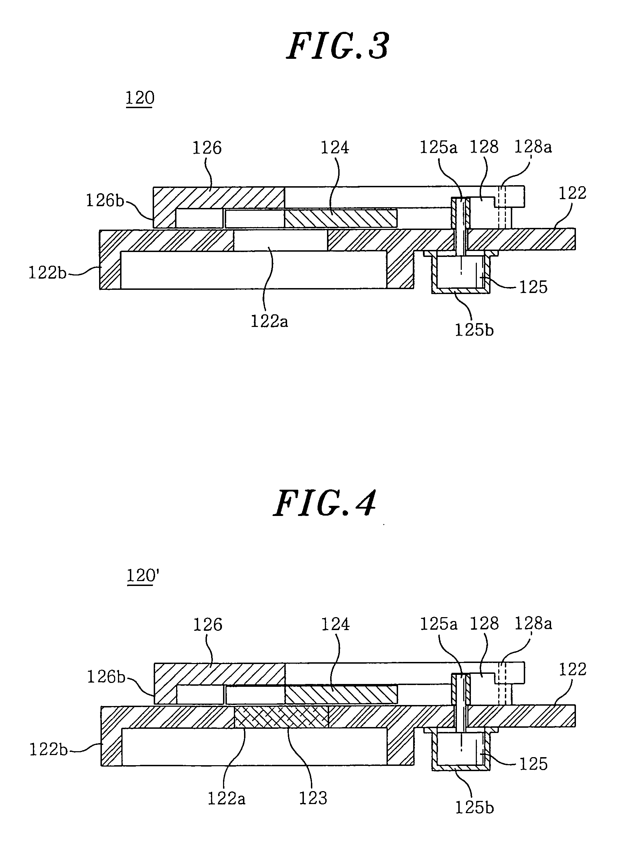

Referring to Fig. 2A, there is illustrated a top view of the lens protecting device 120 of the present invention with its circular opening for exposing the objective lens 11 opened. The lens protecting device 120 has a base plate 122 with the circular opening 122a for exposing the objective lens 11. Under a lower surface of the base plate 122, a rotary type actuator 125 having a rotator 125a is mounted by means of a holding member 125b (see Fig. 3). The rotator 125a penetrates the base plate 122 through an opening formed therein. Fixedly attached to a portion of the rotator 125a protruding from an upper surface of the base plate 122 is a rotary bar 128 which is rotatably connected to a lower cover 124 and an upper cover 126 at its two end portions by means of two pins 128a, respectively. The lower cover 124 is movably disposed on the upper surface of the base plate 122 and has a semicircular cutaway portion 124a at its free end portion. The upper cover 126 is movably disposed on an upper surface of the lower cover 124 and has a semicircular cutaway portion 126a corresponding to the semicircular cutaway portion 124a at its one edge portion facing the rotary bar 128. A C-shaped protrusion portion 126b protrudes downwardly toward the upper surface of the base plate 122 at a free end of the upper cover 126.

In case the rotary bar 128 is placed in an open position as shown in Fig. 2A, two semicircular cutaway portions 124a and 126a form a circular opening to be superimposed on the circular opening 122a when viewed from the top. Thus, the reproducing beam and the signal beam can pass through the lens protecting device 120.

Referring to Fig. 2B, there is provided a top view of the lens protecting device 120 of the present invention with the circular opening 122a for exposing the objective lens 11 closed. In order to change a state of the opening 122a from openness shown in Fig. 2A to closeness, the rotary bar 128 is rotated clockwise by a certain angular degree to a close position, so that the upper cover 126 is moved in a right direction while, at the same time, the lower cover 124 is moved in a left direction. When the rotary bar 128 is located in the closed position, the circular opening 122a is covered by the lower and the upper cover 124 and 126, and the protrusion portion 126b is in contact with the free end of the lower cover 124. An outer surface of the objective lens 11 facing the disk 20 is covered and a space formed between the base plate 122 and the upper portion of the outer casing 10a is closed to prevent an introduction of foreign materials thereinto.

Referring to Fig. 3, there is offered a cross sectional view of the lens protecting device 120 taken along a line A-A of Fig. 2B. The rotary bar 128 has a stepped portion at the end portion connected to the upper cover 126, and has also a stepped portion (see Fig. 2A or 2B) at the end portion connected to the lower cover 124. The base plate 122 has a connecting portion 122b firmly attached to a periphery of the upper portion of the outer casing 10a (see Fig. 1). Thus, the connection between the outer casing 10a and the lens protecting device 120 can be facilitated.

Next, the operation of the optical storage system will now be described.

The disk 20 is loaded into a disk loading device of the optical storage system to be mounted on the driving device 21. If a reproduction operation is initiated, the control device 40 controls the rotary type actuator 125 to rotate the rotator 125 counterclockwise by a certain angular degree, so that the rotary bar 128 in the closed position shown in Fig. 2B is rotated to the open position shown in Fig. 2A. Thus, the semicircular cutaway portions 124a and 126a form the circular opening to be superimposed on the circular opening 122a as shown in Fig. 2A and the objective lens 11 is exposed. Then, the pick-up head 10 emits the reproducing beam through the objective lens 11 and the circular opening 122a of the lens protecting device 120 to the disk 20 and receives the signal beam from the disk 20 through the circular opening 122a and the objective lens 11.

Further, when the reproduction operation is ended, the control device 40 controls the rotary type actuator 125 to rotate the rotator 125a clockwise by a certain angular degree, so that the rotary bar 128 is rotated from the open position to the closed position. Thus, the circular opening 122a is completely closed by the lower and the upper cover 124 and 126, and the introduction of the foreign materials into the space below the base plate 122 is prevented. Accordingly, attachment of the foreign materials to the objective lens 11 is also prevented, and reliability of signal reproduction is improved increased.

Referring to Fig. 4, there is shown a cross sectional view of a lens protecting device in accordance with a modified embodiment of the first preferred embodiment. The lens protecting device 120' is identical to the lens protecting device 120 except that the circular opening 122a of the base plate 122 is filled with a transparent material 123. Thus, introduction of foreign materials into the space formed between the base plate 122 and the outer casing 10a is completely avoided. Moreover, the lower and the upper cover 124 and 126 prevent the foreign material from adhering to an outer surface of the transparent material 123 filling in the circular opening 122a.

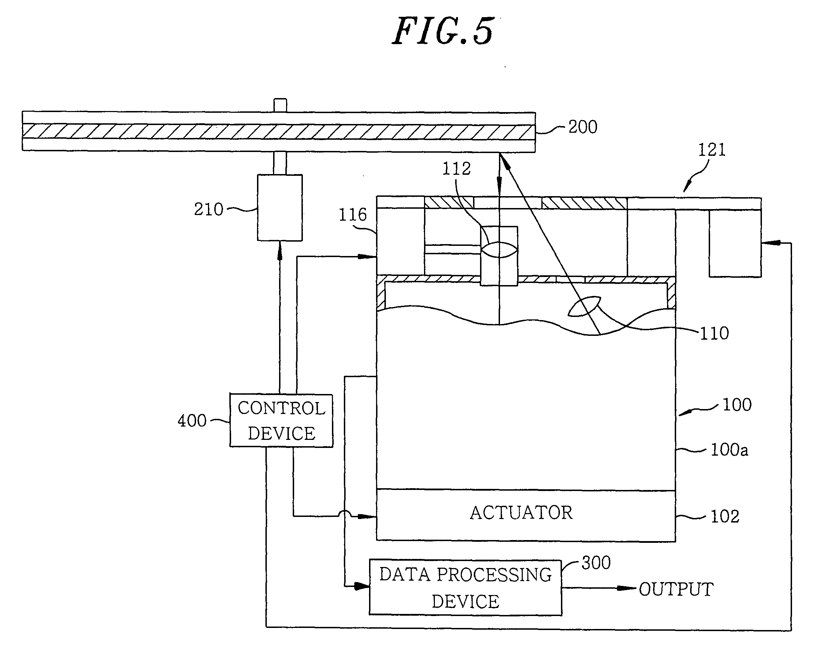

Referring to Fig. 5, there is illustrated a diagram of an optical storage system using a holographic disk as a storage medium in accordance with the second preferred embodiment of the present invention. The optical storage system includes a pick-up head 100 for reproducing information stored in a form of hologram tracks in a disk 200 formed therein. The pick-up head 100 introduces a beam through a reducer lens 110 on the hologram tracks of the disk 200 (referred to as a reproducing beam hereinafter). The reproducing beam is diffracted by the hologram tracks of the disk 200 and the diffracted beam (hereinafter, referred to as a signal beam) enters the pick-up head 10 through an objective lens 112, which is vertically moved by an actuator 116 controlled by a control device 400. Then, the pick-up head 100 detects the signal beam and transmits signals to a data processing device 300 in response to the signal beam. Further, the disk 200 is rotated by a driving device 210, which is controlled by the control device 400. And the pick-up head 100 is moved in a radial direction relative to the disk 200 by an actuator 102, which is also controlled by the control device 400.

Further, the pick-up head 100 has a lens protecting device 121 for preventing foreign materials from adhering to the objective lens 112 and the reducer lens 110. The lens protecting device 121 is mounted between the objective lens 112 and the reducer lens 110 and the disk 200 mounted on the driving device 210, and controlled by the control device 400. In response to a control signal from the control device 400, the lens protecting device 121 allows the reproducing beam and the signal beam to pass therethrough, or covers the objective lens 112 and the reducer lens 110.

In the second preferred embodiment, the structure and operation of the lens protecting device 121 is similar to that of the first preferred embodiment except that the lens protecting device 121 is configured in such a manner that the reproducing beam passing through the reducer lens 110 instead of the objective lens 112 can pass therethrough. Thus, the detailed description therefor is omitted for simplicity. Further, a circular opening for exposing objective lens 112 and the reducer lens 110 in the lens protection device 12 can be filled with a transparent material like lens protecting device 120'

As described above, the optical storage system of the present invention includes a lens protecting device which encloses optical lenses, such as an optical lens and the reducer lens, in a space disconnected to the surroundings of a pick-up head unless a reproducing operation is performed. Thus, the attachment of foreign materials to the optical lens can be prevented. Accordingly, since the attachment of the foreign materials to the optical lens can be prevented, the reliability of the reproduced signal is improved.

While the invention has been shown and described with respect to the preferred embodiments, it will be understood by those skilled in the art that various changes and modifications may be made without departing from scope of the invention as defined in the following claims.

## Claims

1. An optical storage system, comprising:
an optical storage medium; and
a pick-up head for reproducing information from the optical storage medium, wherein the pick-up head includes an optical lens, and a lens protecting device for preventing a foreign material from adhering to the optical lens.

2. The optical storage system of claim 1, wherein the lens protecting device exposes the optical lens of the pick-up head when the pick-up head reproduces the information from the optical recording medium.

3. The optical storage system of claim 2, wherein the pick-up head further includes an outer casing on which the lens protecting device is mounted in such a manner that the lens protecting device is disposed in front of the optical lens.

4. The optical storage system of claim 3, wherein the lens protecting device has a base plate with an optical lens opening for exposing the optical lens and a covering device for selectively covering or opening the optical lens opening.

5. The optical storage system of claim 4, wherein the covering device has a lower cover movably disposed on an upper surface of the base plate and an upper cover movably disposed on an upper surface of the lower cover.

6. The optical storage system of claim 5, wherein the covering device further has a rotary type actuator having a rotator, and a rotary bar fixed to the rotator, wherein the rotary type actuator is mounted on a lower surface of the base plate and the rotary bar is rotatably connected to the lower cover and the upper cover at both end portions of the rotary bar.

7. The optical storage system of claim 6, wherein the optical lens opening is circular, the lower cover is provided with a semicircular cutaway portion at a free end portion and the upper cover is provided with a semicircular cutaway portion corresponding to the semicircular cutaway portion at an edge portion facing the rotary bar.

8. The optical storage system of claim 7, wherein the rotary bar is rotated by the rotary type actuator between a closed position in which the lower and the upper cover cover the optical lens opening, and an open position in which the lower and the upper cover open the optical lens opening.

9. The optical storage system of claim 8, wherein the upper cover has at a free end portion a protrusion portion protruding downwardly to the upper surface of the base plate, wherein the protrusion portion is in contact with the free end portion of the lower cover when the rotary bar is in the closed position.

10. The optical storage system of claim 9, wherein the optical lens opening is filled with a transparent material.

11. The optical storage system of claim 10, wherein the base plate is provided with at the lower surface a connecting portion which is connected to an upper portion of the outer casing.

12. The optical storage system of claim 11, wherein the optical storage medium is a compact disk or a digital versatile disk.

13. The optical storage system of claim 11, wherein the optical storage medium is a holographic disk.
